# EUROPEAN PATENT SPECIFICATION

(11) **EP 4 350 066 B1**
(45) Date of publication and mention of the grant of the patent: **18.02.2026**
(21) Application number: 24153078.1
(22) Date of filing: 16.12.2019
(51) Int. Cl.: D06F 37/06, D06F 37/04

(54) **LAUNDRY TREATING APPARATUS**
WÄSCHEBEHANDLUNGSVORRICHTUNG
APPAREIL DE TRAITEMENT DE LINGE

(30) Priority: 01.02.2019 KR 20190013927; 04.07.2019 KR 20190080610
(43) Date of publication of application: 10.04.2024
(62) Divisional of application: 20217376.1
(73) Proprietor: LG Electronics Inc., Yeongdeungpo-gu Seoul 07336 (KR)
(72) Inventor: SEO, Min Soo, 08592 Seoul (KR); KIM, Jun Young, 08592 Seoul (KR); LEE, Hong Min, 08592 Seoul (KR)
(74) Representative: Vossius & Partner Patentanwälte Rechtsanwälte mbB

(56) References cited:
- EP-A1- 3 845 697
- EP-A2- 1 382 732
- WO-A1-02/40761
- DE-U- 1 827 413

## Description

This present application claims the benefit of priority to Korean Patent Application No. 10-2019-0013927, entitled "LAUNDRY TREATING APPARATUS," filed on February 1, 2019 and Korean Patent Application No. 10-2019-0080610, entitled "LAUNDRY TREATING APPARATUS," filed on July 4, 2019, in the Korean Intellectual Property Office.

The present invention relates to a laundry treating apparatus capable of adjusting a position of a lifter installed in a rotary drum in accordance with a length of the drum.

Korean Patent Application Publication No. 10-2007-0048913 (hereinafter, referred to as 'related art 1') discloses a method of manufacturing a drum for a washing machine. According to the manufacturing method, a cylindrical drum is manufactured by forming mounting holes for mounting lifters in a quadrangular metal plate and then rolling the metal plate.

Korean Utility Model Registration No. 20-0358903 (hereinafter, referred to as "related art 2") discloses a structure in which a lifter is installed on a drum by using mounting holes. The mounting holes are arranged in a front-rear direction of the drum at predetermined intervals, and a set of mounting holes arranged in this manner is used to mount one lifter. That is, hooks, which correspond in number to the set of mounting holes, are formed in the lifter, and the hooks are caught by the mounting holes, respectively.

Japanese Patent Application Publication No. JP 2004057657 A (hereinafter, referred to as 'related art 3') discloses a structure in which a pair of lifters (or baffles), which constitutes a set, is disposed, in a row in a front-rear direction, on an inner circumferential surface of a drum, and the lifters are disposed at predetermined intervals along a circumferential direction of the drum.

Meanwhile, a manufacturer needs to design drums with different capacities depending on product specifications. In this case, the manufacturer may selectively manufacture a drum (that is, a large-capacity drum) elongated in the front-rear direction and a relatively short drum (that is, a small-capacity drum) by cutting, based on a design dimension, a metal plate to a length of a side of the metal plate corresponding to a length in the front-rear direction of the drum to be manufactured.

However, the distance between the pair of lifters needs to be changed in accordance with the length in the front-rear direction of the drum. Yet, because the hooks formed on the lifters are fastened only to the designated mounting holes in the disclosures of the above related art, the interval between the pair of lifters is inevitably constant even when the length of the drum varies. The structure, in which the interval between the lifter positioned at a front side and the lifter positioned at a rear side is inevitably constant regardless of the length of the drum as described above, has a disadvantage in that the laundry positioned at a front or rear end of the drum cannot come into contact with the lifters due to the distance between a front end of the lifter positioned at the front side and a front end of the drum or between the lifter positioned at the rear side and a rear end of the drum increasing as the length of the drum increases.

EP 3 845 697 A1 relates to a washing machine having a drum rotated about a horizontal axis, and more particularly, to a washing machine having a lifter formed by processing the drum.

EP 1 382 732 A2 relates to a washing machine or a laundry drying machine.

The invention is specified by the independent claims. Preferred embodiments are defined in the dependent claims. An aspect of the present invention is to provide a laundry treating apparatus in which first and second lifters are disposed in a drum in a front-rear direction, and an installation position of the first lifter (or the second lifter) may be changed in the front-rear direction.

Another aspect of the present invention is to provide a laundry treating apparatus in which common front/rear lifters can be applied to drums having different lengths, and a position of the front lifter (or the rear lifter) may be appropriately changed in accordance with the length of the drum.

Still another aspect of the present invention is to provide a laundry treating apparatus capable of adjusting an interval between a front lifter and a rear lifter.

Yet another aspect of the present invention is to provide a laundry treating apparatus which reduces a probability that some of laundry inputted into a drum cannot come into contact with lifters.

Still yet another aspect of the present invention is to provide a laundry treating apparatus which improves washing power by allowing lifters and laundry to frequently come into contact with one another.

Aspects of the present disclosure are not limited to those mentioned above, and other aspects not mentioned above may be clearly understood by those skilled in the art from the following description.

In a laundry treating apparatus according to an embodiment of the present disclosure, a drum is provided to be rotatable about a rotation axis extending in a front-rear direction, and a first lifter and a second lifter are disposed in the drum in the front-rear direction.

The first lifter includes at least one insertion protrusion, and the drum has one or more mounting slots in a first group and one or more mounting slots in a second group.

The at least one insertion protrusion may be selectively inserted into the mounting slot in the first group or the mounting slot in the second group. The installation position of the first lifter is determined based on whether the at least one insertion protrusion is inserted into (or fastened to) the mounting slot in the first group or the mounting slot in the second group.

The mounting slot in the second group is positioned at a position shifted rearward by a predetermined distance from the mounting slot in the first group. Therefore, when the insertion protrusion in one group provided on the first lifter is inserted into the mounting slot in the first group, the first lifter is installed further forward in comparison to the case in which the insertion protrusion is inserted into the mounting slot in the second group.

The mounting slot in the second group is formed in a region shifted rearward within a range in which the mounting slot in the second group partially overlaps the mounting slot in the first group. When the at least one insertion protrusion is inserted into the mounting slot in any one group of the first group and the second group, the mounting slot in the other group may be hidden by the first lifter inside the drum.

When the at least one insertion protrusion is inserted into the mounting slot in any one group, a front end of the first lifter may be positioned forward of any mounting slot belonging to the first group and any mounting slot belonging to the second group, and a rear end of the first lifter may be positioned rearward from any mounting slot belonging to the first group and any mounting slot belonging to the second group.

When the at least one insertion protrusion is inserted into the mounting slot in the second group, a distance D1 from a front end of the drum to a front end of the first lifter may be shorter than a distance D2 from the front end of the drum to a front end of the mounting slot in the first group.

When the at least one insertion protrusion is inserted into the mounting slot in the first group, a distance D3 from a front end of the drum to a rear end of the first lifter may be longer than a distance D4 from the front end of the drum to a rear end of the mounting slot in the second group.

The mounting slots in the first group may include two or more first mounting slots arranged at a first interval in a first row extending in the front-rear direction. The mounting slots in the second group may include two or more second mounting slots arranged in the first row at a position shifted rearward from the mounting slots in the first group by a second interval smaller than the first interval.

The first lifter may have a fastening boss, and the drum may have a first fastening hole coupled to the fastening boss when the at least one insertion protrusion is inserted into the mounting slot in the first group, and a second fastening hole spaced rearward apart from the first fastening hole and coupled to the fastening boss when the at least one insertion protrusion is inserted into the mounting slot in the second group. Here, a distance D5 from a front end of the first lifter to the fastening boss may be longer than the second interval.

In this case, a distance D5 from a front end of the first lifter to the fastening boss may be longer than a distance D between the first fastening hole and the second fastening hole.

The mounting slots in the first group may further include two or more first mounting slots arranged at the first interval in a second row parallel to the first row. The mounting slots in the second group may include two or more second mounting slots arranged in the second row at a position shifted rearward from the mounting slots in the first group by the second interval.

The insertion protrusion may include a vertical portion configured to pass through the mounting slot in a radial direction of the drum, and a catching portion bent from the vertical portion and having a greater width than the vertical portion.

The mounting slot may include an insertion section having a width through which the catching portion passes, and a binding section extending forward or rearward from the insertion section and having a smaller width than the catching portion.

The first lifter may have a catching protrusion. The drum may include a pair of opening portions spaced apart from each other in the front-rear direction, and a pair of catching tabs respectively extending from circumferences of the pair of opening portions, and configured to selectively come into contact with the catching protrusion based on whether the at least one insertion protrusion is inserted into the mounting slot in the first group or the mounting slot in the second group.

The first lifter may have a fastening boss. The drum may have a pair of fastening holes selectively fastened to the fastening boss by means of a predetermined fastening member based on whether the at least one insertion protrusion is inserted into the mounting slot in the first group or the mounting slot in the second group.

The second lifter may include at least one insertion protrusion. The drum may further include a mounting slot in a third group into which the at least one insertion protrusion provided on the second lifter is inserted, respectively.

The mounting slot in the third group may be formed at a position shifted in a circumferential direction from the mounting slot in the first group and the mounting slot in the second group. The mounting slot in the third group may be disposed rearward from the mounting slot in the first group and the mounting slot in the second group.

A region in which the mounting slots in the first and second groups are formed and a region in which the mounting slots in the third group are formed may at least partially overlap one another when viewed from a front side.

The first lifter may include a lifter frame having at least one insertion protrusion, and a frame cover configured to cover the lifter frame and come into contact with laundry in the drum.

The lifter frame may be made of synthetic resin, and the drum and the frame cover may be made of metal.

A laundry treating apparatus according to another embodiment of the present disclosure includes a drum configured to rotate about a predetermined rotation axis extending in a front-rear direction, and a lifter disposed on the drum and having at least one insertion protrusion. The drum has one or more mounting slots in a first group and one or more mounting slots in a second group that correspond to the at least one insertion protrusion, the mounting slot in the second group is formed in a region shifted forward or rearward within a range in which the mounting slot in the second group partially overlaps the mounting slot in the first group, and the at least one insertion protrusion is selectively inserted into the mounting slot in the first group or the mounting slot in the second group.

The mounting slots belonging to the first group may be spaced apart from one another by a first interval in the front-rear direction. The mounting slots belonging to the second group may be formed at positions shifted rearward from the mounting slots belonging to the first group by a second interval smaller than the first interval.

When the at least one insertion protrusion is inserted into the mounting slot in any one group of the first or second groups, a front end of the first lifter may be positioned forward from any mounting slot belonging to the first group and any mounting slot belonging to the second group, and a rear end of the second lifter may be positioned rearward from any mounting slot belonging to the first group and any mounting slot belonging to the second group.

A laundry treating apparatus according to still another embodiment of the present disclosure includes a drum configured to rotate about a predetermined rotation axis extending in a front-rear direction, and a lifter having a pair of first insertion protrusions disposed at a predetermined interval in a first row and a pair of second insertion protrusions disposed at the predetermined interval in a second row parallel to the first row. The drum has a pair of first mounting slots formed in the first row into which the pair of first insertion protrusions is inserted. The drum further has a pair of extra first mounting slots formed in the first row at the predetermined interval, and any one of the pair of extra first mounting slots is disposed between the pair of first mounting slots into which the pair of first insertion protrusions is inserted. The drum has a pair of second mounting slots formed in the second row into which the pair of second insertion protrusions is inserted. The drum further has a pair of extra second mounting slots formed in the second row at the predetermined interval, and any one of the pair of extra second mounting slots is disposed between the pair of second mounting slots into which the pair of second insertion protrusions is inserted.

A laundry treating apparatus according to yet another embodiment of the present disclosure includes a drum configured to rotate about a predetermined rotation axis extending in a front-rear direction, and a lifter having a pair of first insertion protrusions disposed at a predetermined interval in a first row. The drum has a pair of first mounting slots formed in the first row at positions corresponding to the pair of first insertion protrusions, and the first insertion protrusions are inserted into the pair of first mounting slots. The drum further has a pair of extra first mounting slots formed in the first row at the predetermined interval, and any one of the pair of extra first mounting slots is disposed between the pair of first mounting slots formed at the positions corresponding to the pair of first insertion protrusions.

The lifter may include a pair of second insertion protrusions disposed at the interval in a second row parallel to the first row. The drum may have a pair of second mounting slots formed in the second row at positions corresponding to the pair of second insertion protrusions, and the second insertion protrusions are inserted into the pair of second mounting slots. The drum may further have a pair of extra second mounting slots formed in the second row at the predetermined interval, and any one of the pair of extra second mounting slots may be disposed between the pair of second mounting slots formed at the positions corresponding to the pair of second insertion protrusions.

According to the laundry treating apparatus according to the present disclosure, the two sets of mounting slots for installing the lifter on the drum are spaced apart from one another in the front-rear direction. Accordingly, the installation position of the lifter may be changed based on which group of mounting slots the at least one insertion protrusion provided on the lifter is inserted into.

In particular, the interval between the front lifter and the rear lifter disposed in the drum may be easily adjusted in accordance with a capacity (or length) of the drum during the process of manufacturing the drum. Accordingly, the arrangement of the lifters may be optimized in accordance with the capacity of the drum.

Since the installation positions of the lifters may be changed in accordance with the capacity or the length of the drum, the laundry in the drum may smoothly come into contact with the lifters both in a case in which the drum has a large capacity and in a case in which the drum has a small capacity, thereby improving washing power.

In addition, even when the front/rear lifters having an identical structure to the front/rear lifters for a small-capacity drum are applied to a large-capacity drum, the interval between the front/rear lifters may be adjusted to be larger than that in the small-capacity drum, such that the interval between the front end of the large capacity drum and the front end of the front lifter or the interval between the rear end of the large capacity drum and the rear end of the rear lifter is reduced, thereby minimizing a region in which the laundry cannot come into contact with the lifters.

In addition, when manufacturing a large-capacity drum or a small-capacity drum, only the process of cutting metal plates with common mounting slots in accordance with the capacity of the drum is different, and the other manufacturing processes can be the same for both types of drum. Further, by a simple process of selecting which mounting slot the insertion protrusion provided on the lifter is inserted into among the mounting slots in the drum, the arrangement of the lifters may be optimized in accordance with the capacity of the drum, and as a result, it is possible to effectively improve product diversity.

### BRIEF DESCRIPTION OF THE DRAWINGS

The above and other aspects, features, and advantages of the present invention will become apparent from the detailed description of the following aspects in conjunction with the accompanying drawings, in which:
FIG. 1 is a cross-sectional view of a laundry treating apparatus according to an exemplary embodiment of the present disclosure;
FIG. 2 is a perspective view of a lifter illustrated in FIG. 1;
FIG. 3 is an exploded perspective view of the lifter illustrated in FIG. 2;
FIG. 4 is a plan projection view of the lifter illustrated in FIG. 2;
FIG. 5 is a view illustrating a raw material (a) cut to manufacture a large-capacity drum, and a raw material (b) cut to manufacture a small-capacity drum;
FIG. 6 is an enlarged view (a) of a part of the drum corresponding to a part A illustrated in FIG. 5 and an enlarged view (b) of a part of the drum corresponding to a part B illustrated in FIG. 5;
FIG. 7 is an enlarged view (a) of part B of the drum illustrated in (a) of FIG. 5 and an enlarged view (b) of a part C of the drum illustrated in (b) of FIG. 5;
FIG. 8 is a top plan view of a lifter frame, and FIG. 9 is a bottom plan view of the lifter frame;
FIG. 10 is a cross-sectional view taken along a line A-A illustrated in FIG. 2;
FIG. 11 is a front view of the lifter frame, and FIG. 12 is a side view of the lifter frame;
FIG. 13 is a top plan view of a frame cover, FIG. 14 is a front view of the frame cover, and FIG. 15 is a side view of the frame cover;
FIG. 16 is a view illustrating a pair of front and rear lifters illustrated in FIG. 1;
FIG. 17 is a view illustrating the lifters illustrated in FIG. 16 when viewed from a front side;
FIG. 18 is a view (a) illustrating a state in which the drum illustrated in FIG. 1 is deployed and a developed view (b) of the drum having the lifters disposed according to the present invention;
FIG. 19 is a view (a) illustrating a change in height of a first fabric caused by the rear lifter in accordance with a rotation angle of the drum and a view (b) illustrating a change in height of a second fabric caused by the front lifter that constitutes a set together with the rear lifter;
FIG. 20 is a view illustrating an inner circumferential surface of a drum having mounting slots according to a modified example, in which (a) illustrates a small-capacity drum and (b) illustrates a large-capacity drum; and
FIG. 21 is a view illustrating another exemplary embodiment of the lifter.

Advantages and features of the present disclosure and methods for achieving them will become apparent from the descriptions of aspects herein below with reference to the accompanying drawings. However, the present disclosure is not limited to the aspects disclosed herein but may be implemented in various different forms. The aspects are provided to make the description of the present disclosure thorough and to fully convey the scope of the present disclosure to those skilled in the art. It is to be noted that the scope of the present disclosure is defined only by the claims.

The shapes, sizes, ratios, angles, the number of elements given in the drawings are merely exemplary, and thus, the present disclosure is not limited to the illustrated details. Like reference numerals designate like elements throughout the specification.

In relation to describing the present disclosure, when the detailed description of the relevant known technology is determined to unnecessarily obscure the gist of the present disclosure, the detailed description may be omitted.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms "connected" and "coupled" are not restricted to physical or mechanical connections or couplings, and can include electrical connections or couplings, whether direct or indirect. The connection can be such that the objects are permanently connected or releasably connected. The term "communicatively coupled" is defined as connected, either directly or indirectly through intervening components, and the connections are not necessarily limited to physical connections, but are connections that accommodate the transfer of data, fluids, or other matter between the so-described components.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

Hereinafter, a washing machine will be described as an example of a laundry treating apparatus, but the laundry treating apparatus is not limited to the washing machine. The laundry treating apparatus is an apparatus for treating laundry (or an object to be dried) such as clothes inputted into a drum 51 and may be a dryer or a washing-drying machine.

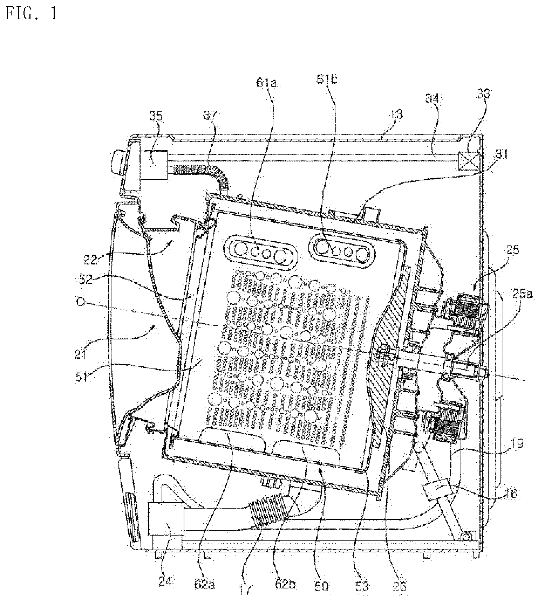

Referring to FIG. 1, a laundry treating apparatus according to an exemplary embodiment of the present disclosure may include a casing 13 configured to define an exterior, a water storage tub 31 disposed in the casing 13 and configured to store washing water, a washing tub 50 rotatably installed in the water storage tub 31 and configured to receive inserted laundry, and a motor 25 configured to rotate the washing tub 50. A damper 16 configured to absorb vibration of the water storage tub 31 may be provided in the casing 13.

A drum 51 may be rotated about a rotation axis O extending in a front-rear direction, and the drum 51 may constitute the washing tub 50. The rotation axis is approximately horizontal. However, the term "horizontal" does not mean "geometrically horizontal" in a strict sense. In a case in which an inclination is closer to a horizontal axis than a vertical axis even though the inclination is formed at a certain angle with respect to the horizontal axis as illustrated in FIG. 1, it will be said that the drum 51 or the washing tub 50 is rotated about the horizontal axis.

A laundry insertion port is formed in a front surface of the casing 13, and a door 21 configured to open or close the laundry insertion port may be rotatably provided on the casing 13. A tubular gasket 22 is provided such that the laundry insertion port and an inlet of the water storage tub 31 communicate with each other. The gasket 22 is made of a soft material (for example, rubber). A front end of the gasket 22 may be connected to a circumference of the laundry insertion port of the casing 13, and a rear end of the gasket 22 may be connected to a circumference of the inlet of the water storage tub 31.

A water supply valve 33, a water supply pipe 34, and a water supply hose 37 may be installed in the casing 13. When the water supply valve 33 is opened and the washing water is supplied, the washing water that has passed through the water supply pipe 34 may be mixed with detergent in a dispenser 35 that stores the detergent, and then the washing water may be supplied to the water storage tub 31 through the water supply hose 37.

An input port of a pump 24 is connected to the water storage tub 31 through the drain hose 17, and a discharge port of the pump 24 is connected to drain pipes 19. The water discharged from the water storage tub 31 through the drain hose 17 is pumped by the pump 24, flows through the drain pipes 19, and then is discharged to the outside of the laundry treating apparatus.

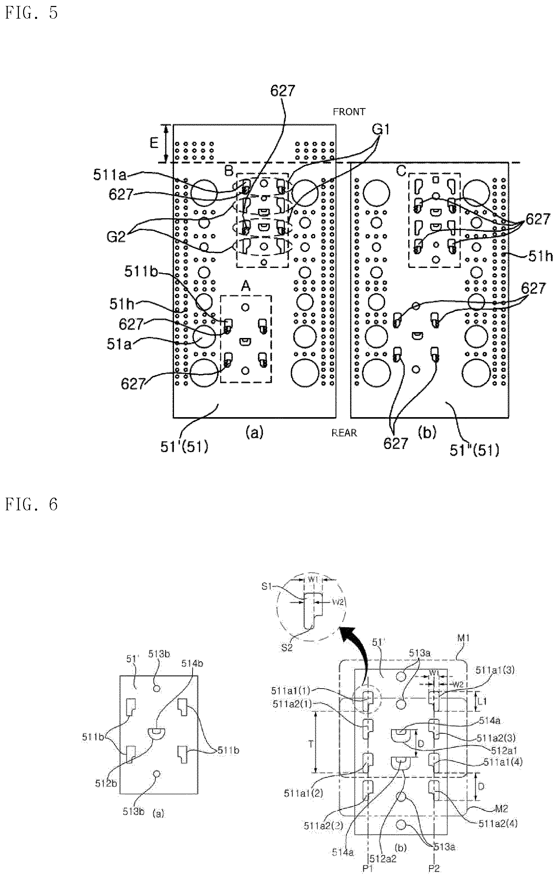

The washing tub 50 may include the drum 51, a front cover 52 coupled to a front end of the drum 51, and a rear cover 53 coupled to a rear end of the drum 51. The drum 51 may be formed in the form of a tubular (or cylindrical) body made by rolling up a metal plate (for example, made of stainless steel) having a plurality of throughholes 51h (see FIG. 5) and then joining both ends of the metal plate. The water stored in the water storage tub 31 may be introduced into the washing tub 50 through the throughholes 51h. A plurality of embossed portions 51a (see FIG. 5), which are convexly formed by plastic processing, may be formed on an inner circumferential surface of the drum 51, and the throughholes 51h may be formed between the embossed portions 51a.

An opening portion may be formed in the front cover 52 so that laundry may be inserted into the drum 51. The inlet of the water storage tub 31 communicates with the opening portion. The front cover 52 may be made of the same type of material as the drum 51.

The rear cover 53 closes an opened rear side of the drum 51, and a spider 26 connected to a driving shaft 25a of the motor 25 may be coupled to a rear surface of the rear cover 53. The spider 26 is configured to transmit rotational force of the driving shaft 25a to the washing tub 50, and the driving shaft 25a of the motor 25 may be coupled to a center of the spider 26.

A plurality of lifters 61a, 61b, 62a, 62b, 63a, and 63b are provided in the drum 51. When the drum 51 is rotated, the laundry is lifted up by the lifters 61a, 61b, 62a, 62b, 63a, and 63b.

The plurality of lifters 61a, 61b, 62a, 62b, 63a, and 63b include first and second lifters disposed in the front-rear direction of the drum 51. Hereinafter, an example in which the first lifters are front lifters 61a, 62a, and 63a and the second lifters are rear lifters 61b, 62b, and 63b spaced rearward apart from the front lifters will be described. However, the first lifter may be the rear lifter and the second lifter may be the front lifter depending on the embodiment.

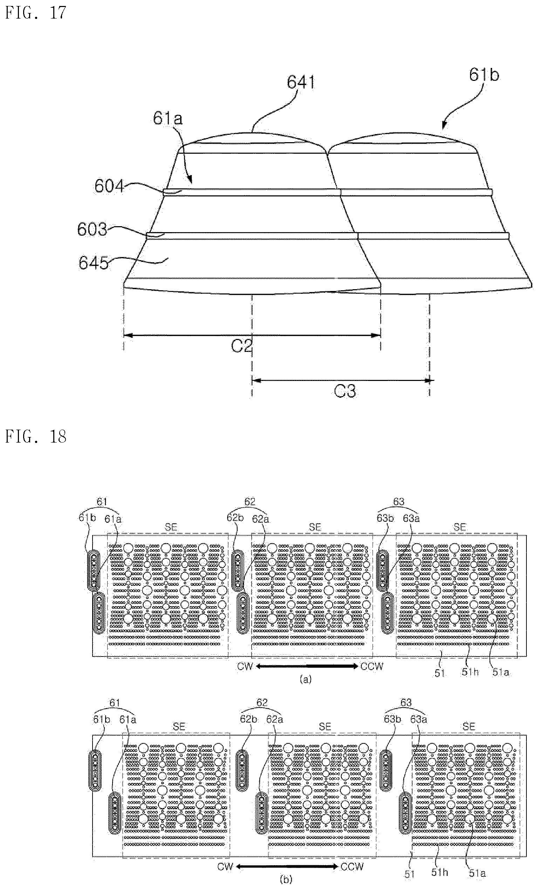

Referring to FIGS. 1 and 18, the plurality of front lifters 61a, 62a, and 63a, together with the plurality of rear lifters 61b, 62b, and 63b, define sets (or pairs), respectively. Three sets of lifters 61 (61a and 61b), 62 (62a and 62b), and 63 (63a and 63b) may be disposed at equal angles about the rotation axis O, but the present disclosure is not necessarily limited thereto. For example, four sets of lifters may be disposed at an interval of 90 degrees or five sets of lifters may be disposed at an interval of 72 degrees about the rotation axis O.

Hereinafter, an example in which the front lifters 61a, 62a, and 63a and the rear lifters 61b, 62b, and 63b have the same structure will be described, but the present disclosure is not necessarily limited thereto.

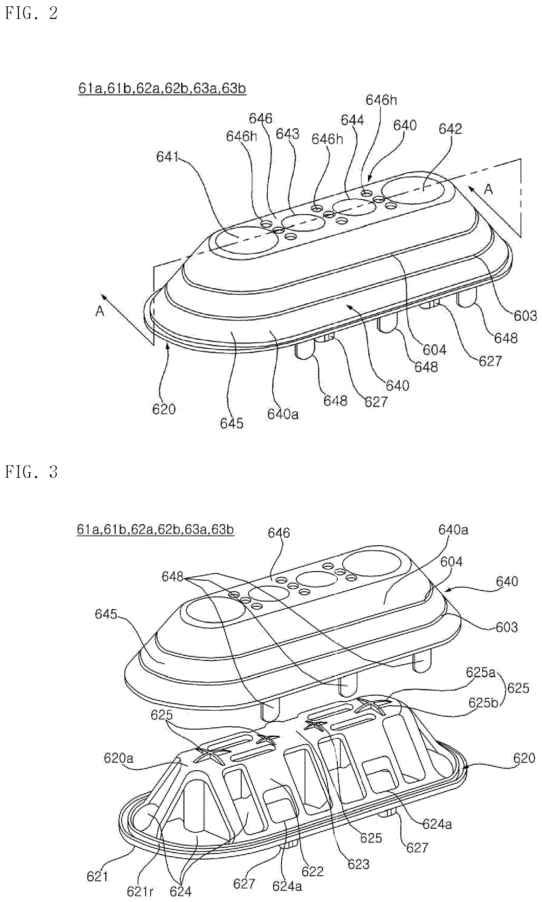

Referring to FIGS. 2 to 4, each of the lifters 61a, 61b, 62a, 62b, 63a, and 63b includes a lifter frame 620 fixed to the drum 51, and a frame cover 640 configured to cover the lifter frame 620. The frame cover 640 protrudes radially inward (toward the inside of the drum 51) from the inner circumferential surface of the drum 51 and comes into contact with the laundry. The frame cover 640 is fixed to the drum 51 by means of the lifter frame 620 instead of being fixed directly to the drum 51.

The lifter frame 620 may be made of synthetic resin. The lifter frame 620 is preferably formed by injection molding, but the present disclosure is not limited thereto.

A lifter made of metal is not only excellent in strength, but also luxurious and hygienic. In order to couple the lifter directly to a drum made of metal, it is necessary to weld the lifter to a raw material cut out in a shape of the deployed drum, roll up the raw material in a cylindrical shape, and then weld together the ends of the raw material where they meet each other. However, raw material that was flat becomes curved during the process of rolling up the raw material, and as a result, there is a concern that stress may be applied to the welded portions between the lifter and the drum and cause the welded portions to separate.

In order to address this concern, the present disclosure proposes a configuration in which a frame cover 640 made of metal is fixed to the drum 51 by means of a lifter frame 620 made of synthetic resin.

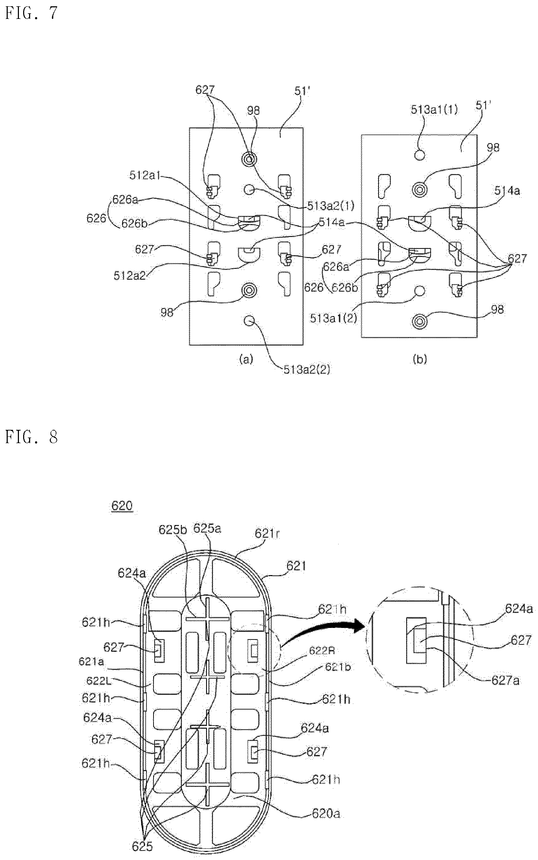

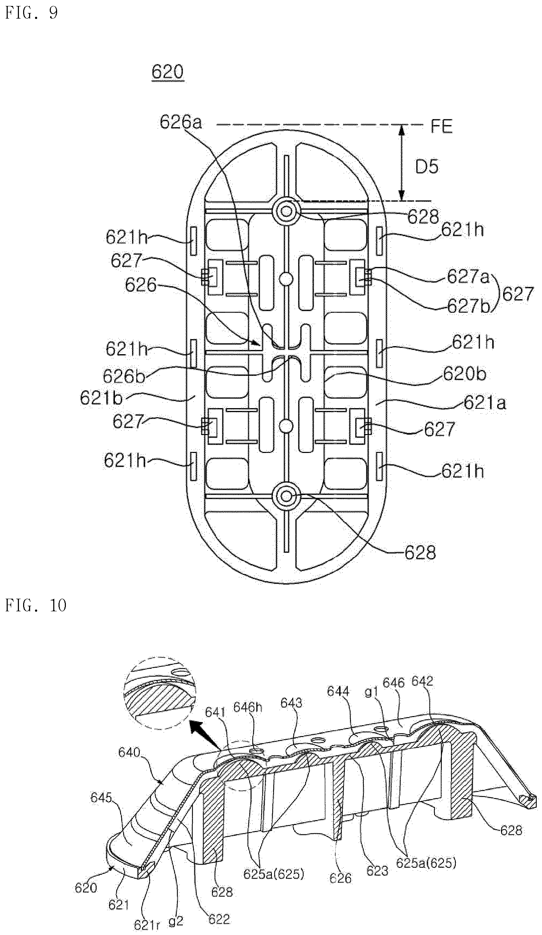

Meanwhile, referring to FIG. 3 and FIGs. 8 to 12, the whole of an outer surface 620a (see FIG. 8) of the lifter frame 620 has a convex shape, and an inner surface 620b (see FIG. 9) of the lifter frame 620 has a concave shape. Specifically, the lifter frame 620 may include a frame base 621, a frame upper plate 623, and a frame sidewall 622.

The frame base 621 is fixed to the inner circumferential surface of the drum 51. The frame base 621 may have a ring shape (or a closed shape formed by a single line) opened at a central portion thereof.

The frame upper plate 623 is spaced apart from the frame base 621 in the direction toward the inside of the drum 51 and connected to the frame base 621 by means of the frame sidewall 622. The frame sidewall 622 may be formed in the form of a tubular (or cylindrical) body, such that a lower end of the frame sidewall 622 is connected to the frame base 621, and an upper end of the frame sidewall 622 is connected to the frame upper plate 623.

The frame sidewall 622 is shaped such that a contour of a cross section thereof gradually decreases upward from the lower end connected to the base 621 (or in the radial direction of the drum 51) (or gradually decreases in a direction away from the inner circumferential surface of the drum 51), and the contour of the cross section is smallest at a portion that meets the frame upper plate 623.

One or more water flow inlet holes may be formed in the drum 51 so as to allow the washing water stored in the water storage tub 31 to be introduced to the inside of the frame cover 640. Any opening portion formed in a region covered by the frame cover 640 may be a water inlet hole. For example, some of the throughholes 51h, which are positioned inside the frame cover 640, may be water flow inlet holes. Furthermore, mounting slots 511a and 511b, fastening holes 513a and 513b, and opening portions 512a and 512b, which will be described below, may be water flow inlet holes.

One or more water flow throughholes 624 and 624a may be formed in the lifter frame 620. Any opening may be a water flow throughhole 624 as long as the opening is formed in the lifter frame 620 and allows the inside and the outside of the lifter frame 620 to communicate with each other.

The water flow throughhole 624 may be formed in the frame sidewall 622 and/or the frame upper plate 623. The washing water stored in the concave space of the lifter frame 620 may be discharged through the water flow throughhole 624.

One or more water flow discharge holes 646h may be formed in the frame cover 640 to discharge the washing water in the lifters 61a, 61b, 62a, 62b, 63a, and 63b into the drum 51. The washing water in the concave space inside the lifter frame 620 may pass through the water flow throughhole 624, and then may be discharged into the drum 51 through the water flow discharge hole 646h.

An outer surface 640a of the frame cover 640, which is exposed to the inside of the drum 51 and comes into contact with the laundry, has a convex shape, and an inner surface of the frame cover 640 has a concave shape that corresponds to the convex outer surface 620a of the lifter frame 620. The frame cover 640 may be made of metal, preferably stainless steel, but the present disclosure is not limited thereto. The frame cover 640 may be formed by plastically processing (for example, pressing) a metal plate having a predetermined thickness.

The frame cover 640 may include a cover sidewall 645 extending upward from a lower end adjoining the frame base 621, and a cover upper plate 646 configured to cover an upper side of the cover sidewall 645. The cover upper plate 646 is approximately parallel to the frame upper plate 623. The plurality of water flow discharge holes 646h may be formed in the cover upper plate 646.

The cover sidewall 645 is shaped such that a contour of a cross section thereof gradually decreases upward from the lower end (or in the radial direction of the drum 51) (or gradually decreases in the direction away from the inner circumferential surface of the drum 51), and the contour of the cross section is smallest at a portion that meets the cover upper plate 646.

The lifter frame 620 includes spacers 625 that protrude from the frame upper plate 623 and are in contact with the frame cover 640, thereby allowing the frame cover 640 to be spaced apart from the frame upper plate 623.

The spacer 625 protrudes from the outer surface 620a of the lifter frame 620 and adjoins the inner surface of the frame cover 640. Because the spacer 625 supports the inner surface of the frame cover 640 in the state in which the frame upper plate 623 is spaced apart from the frame cover 640, the state in which the frame cover 640 is spaced apart from the frame upper plate 623 may be maintained even when the frame cover 640 is pressed toward the lifter frame 620 by external force.

The spacer 625 may have a cross-shaped rib structure. Specifically, the spacer 625 may include a vertical rib 625a extending on the frame upper plate 623 in a longitudinal direction of the lifter frame 620 (or the front-rear direction), and a horizontal rib 625b extending while crossing the vertical rib 625a. The vertical rib 625a and the horizontal rib 625b may be orthogonal to each other.

Referring to FIG. 10, the inner surface of the cover upper plate 646 may be spaced apart from the outer surface of the frame upper plate 623. That is, a predetermined separation space (or a gap g1) may be formed between the inner surface of the cover upper plate 646 and the outer surface of the frame upper plate 623, and the separation space g1 may serve as a flow path that guides the washing water to the water flow discharge hole 646h.

A separation space g2 may also be formed between the frame sidewall 622 and the cover sidewall 645. A seating groove 621r (see FIGS. 8 and 9) to be described below is formed in the frame base 621 and disposed at a position toward the outside of the frame base 621 spaced apart from the frame sidewall 622 at a predetermined distance. Therefore, the lower end of the cover sidewall 645 positioned in the seating groove 621r is spaced apart from the frame sidewall 622. Because the lower end of the frame cover 640 is spaced apart from the frame sidewall 622 by the seating groove 621r and the cover upper plate 646 is spaced apart from the frame upper plate 623 by the spacer 625, two points of the frame cover 640, which are the lower end of the frame cover 640 and the portion of the frame cover 640 supported by the spacer 625, are forcibly spaced apart from the lifter frame 620, and as a result, the state in which the cover sidewall 645 positioned between the two points is spaced apart from the lifter frame 620 is maintained.

The washing water introduced into each of the lifters 61a, 61b, 62a, 62b, 63a, and 63b is introduced into the separation spaces g1 and g2, and water flows formed in the separation spaces g1 and g2 during the rotation of the washing tub 50 clean the outer surface of the lifter frame 620 and the inner surface of the frame cover 640. Foreign substances produced during the cleaning process may be discharged through the water flow discharge hole 646h formed in the frame cover 640 or through the water inlet hole formed in the drum 51. The flow paths are formed between the lifter frame 620 and the frame cover 640 by the separation spaces g1 and g2, and as a result, this configuration may be advantageous in maintaining the lifters 61a, 62a, 63a, 61b, 62b, and 63b in a clean state.

The frame cover 640 may have domes 641, 642, 643, and 644 formed at the positions corresponding to the spacers 625. That is, the spacers 625 may be disposed below the domes 641, 642, 643, and 644. In the case in which the plurality of spacers 625 are formed in the exemplary embodiment, the plurality of domes 641, 642, 643, and 644 may be formed at the positions corresponding to the plurality of spacers 625, respectively.

The domes 641, 642, 643, and 644 may be formed on the cover upper plate 646. An inner surface of each of the domes 641, 642, 643, and 644, which faces the spacer 625, may be concavely formed, and an outer surface of each of the domes 641, 642, 643, and 644 may be convexly formed. The concave inner surface of each of the domes 641, 642, 643, and 644 may contact the spacer 625.

The domes 641, 642, 643, and 644 are convexly formed by pressing the cover upper plate 646, which is made of metal. The plurality of domes 641, 642, 643, and 644 may be disposed in the longitudinal direction of the cover upper plate 646 (or the longitudinal direction of the lifters 61a, 61b, 62a, 62b, 63a, and 63b). The one or more water flow discharge holes 646h may be formed between the adjacent domes 641, 642, 643, and 644.

The domes 641, 642, 643, and 644 may include two or more domes of which the depth of the concave portion of the inner surfaces thereof is different from each other. In more detail, the domes 641, 642, 643, and 644 may include large domes 641 and 644, each of which have a concave portion of a first depth, and small domes 642 and 643, each of which have a concave portion of a second depth smaller than the first depth. The height of the spacers 625a and 625d corresponding to the large domes 641 and 644 may be greater than the height of the spacers 625b and 625c corresponding to the small domes 642 and 643.

The domes 641, 642, 643, and 644 may include the two or more domes having different sizes. Each of the domes 641, 642, 643, and 644 may have a circular shape, but the present disclosure is not necessarily limited thereto. Here, the 'size' may be determined based on the shape when the concave portion of the inner surface of each of the domes 641, 642, 643, and 644 are viewed from above, and for example, the 'size' may be defined as a diameter of the concave portion. However, since the difference between the inner diameter and the outer diameter of each of the domes 641, 642, 643, and 644 is merely due to the thickness of the material, the size may be defined based on the outer diameter of each of the domes 641, 642, 643, and 644.

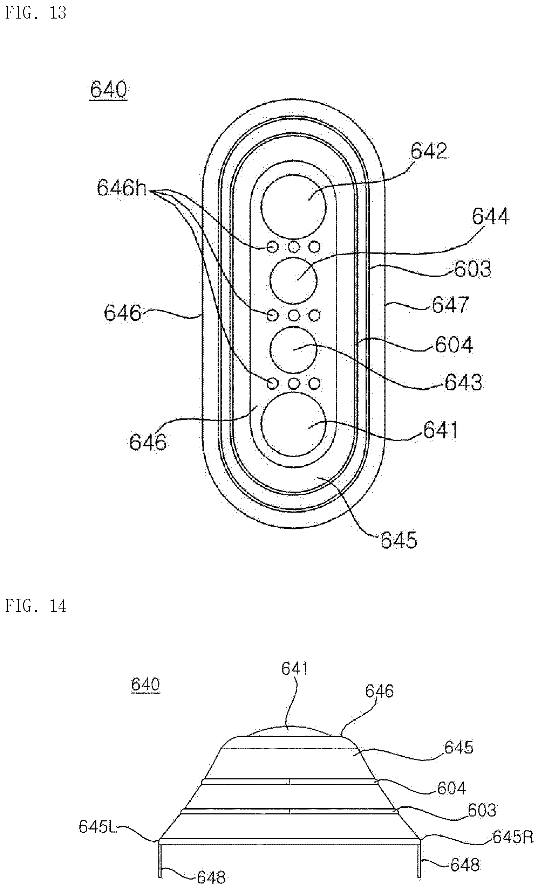

The size of the spacer 625 may also vary depending on the size of each of the domes 641, 642, 643, and 644. That is, in the case in which there are the large domes 641 and 644 and the small domes 642 and 643 as illustrated in FIG. 13, the spacer 625 corresponding to the large domes 641 and 644 may be larger than the spacer 625 corresponding to the small domes 642 and 643.

The two small domes 643 and 644 may be positioned between the pair of large domes 641 and 642, and the water flow discharge holes 646h may be formed between the domes 641, 642, 643, and 644. The plurality of water flow discharge holes 646h may be arranged in a direction crossing the lifters 61a, 61b, 62a, 62b, 63a, and 63b (or a direction orthogonal to the length of each of the lifters 61a, 61b, 62a, 62b, 63a, and 63b).

The water stored in the water storage tub 31 is introduced into the lifters 61a, 61b, 62a, 62b, 63a, and 63b through the opening portion. The lifter frame 620 is a structure having one or more of the water flow throughholes 624, and the water introduced into the lifters 61a, 61b, 62a, 62b, 63a, and 63b may reach the water flow discharge holes 646h through the water flow throughholes 624.

The washing water introduced into the lifters 61a, 61b, 62a, 62b, 63a, and 63b is raised by the rotation of the washing tub 50 in the state in which the washing water is in the lifters 61a, 61b, 62a, 62b, 63a, and 63b, and the washing water is discharged (or sprayed) through the water flow discharge holes 646h in this process.

Referring to FIGS. 2, 3, 10, and 13 to 15, the frame cover 640 may include one or more washing protrusions 603 and 604 having a ring shape or one or more washing rings protruding from the outer surface of the cover sidewall 645. The plurality of washing protrusions 603 and 604 may be disposed in parallel with one another. In the exemplary embodiment, two washing protrusions 603 and 604 are provided, but the present disclosure is not necessarily limited thereto. In the case in which the frame cover 640 is made of metal, the washing protrusions 603 and 604 may be formed by pressing.

Each of the washing protrusions 603 and 604 has a shape corresponding (or similar) to the contour of the cover sidewall 645, and preferably, the washing protrusion may protrude to a predetermined height from the cover sidewall 645. Since the contour of the cover sidewall 645 decreases upward, among the washing protrusions 603 and 604, the washing protrusion that is positioned at an upper side is smaller than the other washing protrusion.

A frictional force applied between the laundry and the washing protrusions 603 and 604 generates an effect of rubbing the laundry, thereby improving washing power. In addition, because the washing protrusions 603 and 604 assist in the operation of lifting up the laundry, physical force (for example, force for lifting up or striking the laundry) of a level as in the related art may be applied to the laundry even when the height of each of the lifters 61a, 61b, 62a, 62b, 63a, and 63b is decreased to be smaller than that in the related art.

The frame cover 640 may be coupled to the lifter frame 620. Referring to FIGS. 2 and 3, one or more coupling tabs 648 may be formed at the lower end of the frame cover 640. As illustrated in FIG. 14, the coupling tabs 648 may be formed at a left side 645L or a right side 645R at the lower end when the frame cover 640 is viewed from the front side. The left side 645L and the right side 645R may be straight sections extending in the front-rear direction.

Referring to FIGS. 8 and 9, tab binding ports 621h, through which the coupling tabs 648 pass from above, may be formed in the lifter frame 620. The tab binding ports 621h may be formed at positions corresponding to the coupling tabs 648, respectively. A coupling tab 648 passes through the tab binding port 621h, and the passing portion of the coupling tab 648 is bent and caught by a rim of the tab binding port 621h (or a bottom surface of the frame base 621), such that the lifter frame 620 and the frame cover 640 may be coupled to each other.

Meanwhile, the seating groove 621r, which corresponds to the lower end of the frame cover 640, may be formed in the frame base 621 of the lifter frame 620. The lower end of the frame cover 640 may be inserted and seated in the seating groove 621r. In this case, the tab binding port 621h may be formed in the seating groove 621r.

Hereinafter, a structure in which the lifter frame 620 and the drum 51 are coupled to each other will be described.

Referring to FIGS. 8, 9, 11, and 12, one or more insertion protrusions 627 may be formed on each of the front lifters 61a, 62a, and 63a and/or the rear lifters 61b, 62b, and 63b. Further, referring to FIGS. 5 to 7, the drum 51 may have mounting slots 511a1 in a first group G1 and mounting slots 511a2 in a second group G2. Each of the groups G1 and G2 may include the one or more mounting slots 511a1(1) to 511a1(4). Here, the 'group' is a set of mounting slots and may include one or a plurality of mounting slots.

The mounting slots 511a1 in the first group G1 and the mounting slots 511a2 in the second group G2 may include a number of the mounting slots 511a1(1) to 511a1(4) and 511a2(1) to 511a2(4) that corresponds to the number of the one or more insertion protrusions 627. That is, in the case in which the mounting slots in the first group G1 and the second group G2 are used to install the front lifters 61a, 62a, and 63a, the number of mounting slots 511a1 in the first group G1 and the number of mounting slots 511a2 in the second group G2 may correspond to the number of insertion protrusions 627 provided on each of the front lifters 61a, 62a, and 63a.

Likewise, depending on the embodiment, in the case in which the mounting slots in the first group G1 and the second group G2 are used to install the rear lifters 61b, 62b, and 63b, the number of mounting slots 511a1 in the first group G1 and the number of mounting slots 511a2 in the second group G2 may correspond to the number of insertion protrusions 627 provided on each of the rear lifters 61b, 62b, and 63b.

The one or more insertion protrusions 627 formed on each of the front lifters 61a, 62a, and 63a or the rear lifters 61b, 62b, and 63b may be selectively fastened to the mounting slots 511a2 in the first group G1 or the second group G2. The position at which the lifter is installed may be determined depending on whether the one or more insertion protrusions 627 formed on each of the lifters 61a, 62a, 63a, 61b, 62b, and 63b are inserted into the mounting slots that constitute any one of the first group G1 or the second group G2.

Hereinafter, the example in which the mounting slots 511a, which constitute the first group G1 and the second group G2, are used to install the front lifters 61a, 62a, and 63a will be described, but the mounting slots may be formed in the same manner in order to install the rear lifters 61b, 62b, and 63b.
the mounting slots 511a2 in the second group G2 are formed in a region shifted rearward within a range in which the mounting slots 511a2 in the second group G2 partially overlap the mounting slots 511a1 in the first group G1. For reference, in FIG. 6, a first region M1 indicates a region in which the mounting slots 511a1 in the first group G1 are formed, and a second region M2 indicates a region in which the mounting slots 511a2 in the second group G2 are formed. Hereinafter, as illustrated in FIG. 6, the mounting slots 511a2 in the second group G2 are disposed rearward from the mounting slots 511a1 in the first group G1.

Referring to FIGS. 5 to 7, the mounting slots 511a2 in the second group G2 are spaced apart from the mounting slots 511a1 in the first group G1 in the rearward direction at a predetermined distance D. Therefore, when the insertion protrusions 627 are installed in the mounting slots 511a1 in the first group G1, each of the front lifters 61a, 62a, and 63a is positioned further forward by a distance D in comparison with a case in which the insertion protrusions 627 are installed in the mounting slots 511a2 in the second group G2. As illustrated in FIG. 5, the metal plate of the large-capacity drum 51 further extends forward by a distance E in comparison with a case in which the drum is the small-capacity drum. In the case of the large-capacity drum (a), the front lifters 61a, 62a, and 63a are installed by using the mounting slots 511a1 in the first group G1, such that the front lifters 61a, 62a, and 63a may be installed relatively further forward in comparison with the case in which the drum is the small-capacity drum (b). Therefore, the laundry positioned in the region corresponding to the distance E may easily come into contact with the front lifters 61a, 62a, and 63a while the drum 51 rotates.

The mounting slots 511a in the respective groups G1 and G2 may be disposed in rows in the front-rear direction. Particularly, the mounting slots 511a in each of the groups G1 and G2 are disposed in two rows. Further, when the entire configuration is viewed without distinguishing the groups, the mounting slots 511a may be arranged along common reference lines extending in the front-rear direction. Preferably, in the embodiment, the mounting slots are disposed on two straight lines parallel to each other.

In more detail, the mounting slots 511a1 in the first group G1 may include two or more first mounting slots 511a1(1) and 511a1(2) arranged at a first interval T in a first row P1 extending in the front-rear direction. Furthermore, the mounting slots 511a1 in the first group G1 may further include two or more first mounting slots 511a1(3) and 511a1(4) arranged at the first interval T in a second row P2 parallel to the first row P1.

The mounting slots 511a2 in the second group G2 may include two or more second mounting slots 511a2(1) and 511a2(2) arranged in the first row P1 at positions shifted, by a second interval D smaller than the first interval T, rearward from the mounting slots 511a1 in the first group G1.

Furthermore, the mounting slots 511a2 in the second group G2 may further include two or more second mounting slots 511a2(3) and 511a2(4) arranged in the second row P2 at positions shifted, by the interval T, rearward from the mounting slots 511a1 in the first group G1.

Hereinafter, the mounting slots 511a1 and 511a2, which can be used to install the front lifters 61a, 62a, and 63a, are defined as being in a front lifter installation group, and the mounting slots 511b (see (a) of FIG. 6), which can be used to install the rear lifters 61b, 62b, and 63b, are defined as being in a rear lifter installation group.

The plurality of front or rear lifters 61a, 62a, 63a, 61b, 62b, and 63b may be disposed in a circumferential direction of the drum 51, such that the plurality of front lifter installation groups may be disposed in the circumferential direction, and likewise, the plurality of rear lifter installation groups may also be disposed in the circumferential direction.

Hereinafter, the mounting slot belonging to the front lifter installation group is referred to as the front mounting slot 511a, and the mounting slot belonging to the rear lifter installation group is referred to as the rear mounting slot 511b.

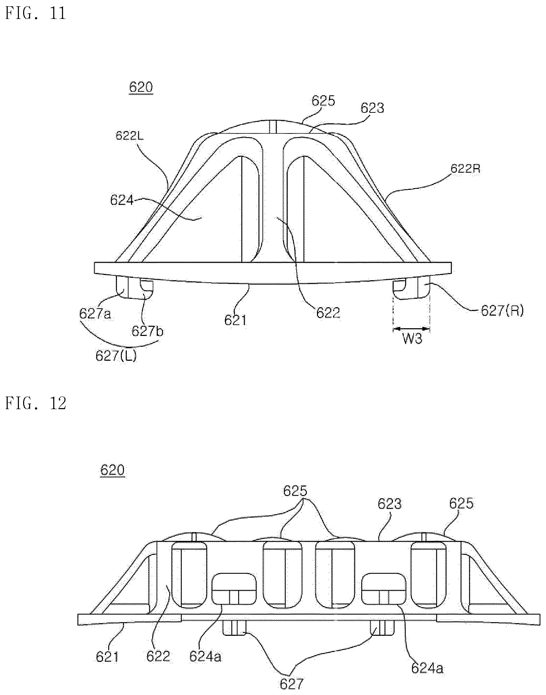

referring to FIGS. 8 to 12, the insertion protrusion 627 may protrude from the frame base 621. The insertion protrusion 627 may include a vertical portion 627a (see FIG. 11) protruding downward from the bottom surface of the frame base 621, and a catching portion 627b bent in the horizontal direction from the vertical portion 627a. The catching portion 627b may protrude toward the inside of the ring-shaped frame base 621 when viewed from above.

As illustrated in FIG. 11, the insertion protrusions 627 may be formed at left and right sides of the frame base 621, respectively, when the lifter frame 620 is viewed from the front side. The two or more insertion protrusions 627 may be formed along one side of the frame base 621 (or in the front-rear direction).

Specifically, the insertion protrusion 627(L) formed at the left side of the frame base 621 may include the catching portion 627b which is bent rightward. On the contrary, the insertion protrusion 627(R) formed at the right side of the frame base 621 may include the catching portion 627b which is bent leftward.

Referring to FIG. 6, each of the mounting slots 511a and 511b may be shaped to have a length L1 in the approximately front-rear direction of the drum 51. Each of the mounting slots 511 and 511b may include an insertion section S1 having a predetermined width W1, and a binding section S2 extending rearward or forward from the insertion section S1 and having a smaller width (W2 < W1) than the insertion section S1. In the exemplary embodiment, the binding section S2 extends rearward from a rear end of the insertion section S1, but the present disclosure is not necessarily limited thereto. On the contrary, the binding section S2 may extend forward from a front end of the insertion section S1.

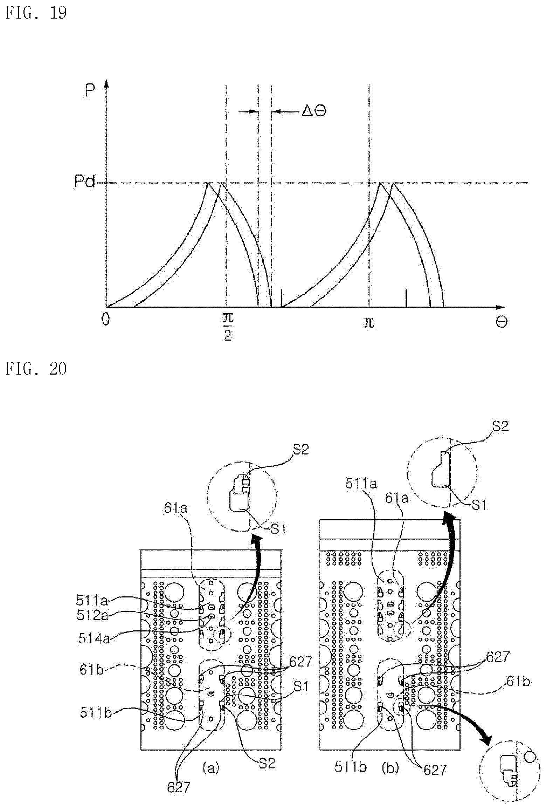

Furthermore, as illustrated in FIG. 20, to be described below, in the exemplary embodiment, the binding section S2 of the front mounting slot 511a may extend forward from the front end of the insertion section S1, and the binding section S2 of the rear mounting slot 511b may extend rearward from the rear end of the insertion section S1.

Meanwhile, referring to FIGS. 5 to 7, when installing the lifter frame 620 in the drum 51, the insertion protrusion 627 of the lifter frame 620 passes through the insertion section S1, and the lifter frame 620 is pushed rearward, such that the vertical portion 627a is moved forward along the binding section S2, and thus the catching portion 627b is positioned below the binding section S2. In this case, since the bottom surface of the frame base 621 is in close contact with the inner circumferential surface of the drum 51, and a width W3 (see FIG. 11) of the catching portion 627b is larger than the width W2 of the binding section S2, the catching portion 627b cannot pass through the binding section S2 from the lower side to the upper side.

Referring to FIGS. 9 and 10, a catching protrusion 626 may be formed on at least one of the front lifters 61a, 62a, and 63a or the rear lifters 61b, 62b, and 63b. The catching protrusion 626 may protrude downward from the concave inner surface 620b of the lifter frame 620.

Referring to FIG. 6, the opening portions 512a and 512b, into which the catching protrusions 626 are inserted, may be formed in the drum 51. The pair of opening portions 512a1 and 512a2 for installing the front lifters 61a, 62a, and 63a may be spaced apart from one another by an interval D in the front-rear direction.

The catching protrusion 626 is selectively inserted into any one of the pair of opening portions 512a1 and 512a2 depending on whether the insertion protrusions 627 are inserted into the mounting slots 511a1 in the first group G1 or the mounting slot 511a2 in the second group G2.

Catching tabs 514a and 514b, which each come into contact with (or are caught by) the lower end of the catching protrusion 626, may be formed on rims of the opening portions 512a and 512b. The catching tabs 514a and 514b may come into contact with the lateral surfaces of the catching protrusions 626, thereby restricting lateral movements of the catching protrusions 626.

Meanwhile, the positions of the catching tabs 514a and 514b may be determined based on the relative positions of the mounting slots 511a and 511b with respect to the insertion section S1 of the binding section S2. That is, as illustrated in FIG. 6, when the binding section S2 is positioned rearward from the insertion section S1, the catching tabs 514a and 514b are positioned in a first concave portion 626a at the front side of the catching protrusions 626. The catching tabs 514a and 514b may extend rearward from the front end of the opening portion 512 to restrict the movement of the catching protrusions 626 when the catching protrusion 626 is about to move forward (that is, the insertion protrusion 627 is about to move from the binding section S2 to the insertion section S1).

On the contrary, like the mounting slot 511a illustrated in FIG. 20, when the binding section S2 is positioned forward from the insertion section S1, the catching tabs 514a and 514b are positioned in a second concave portion 626b at the rear side of the catching protrusions 626. The catching tabs 514a and 514b may extend forward from the rear end of the opening portion 512 to restrict the movements of the catching protrusions 626 when the catching protrusion 626 is about to move rearward (that is, the insertion protrusion 627 is about to move from the binding section S2 to the insertion section S1).

The catching tabs 514a and 514b may be bent at a predetermined angle to the outside of the drum 51 based on the portion connected to the rims of the opening portions 512a and 512b. The lateral surfaces of the catching protrusions 626 may come into contact with the catching tabs 514a and 514b even in the state in which the catching protrusions 626 are not inserted into the opening portions 521a and 512b.

When the lifter frame 620 is about to move (that is, about to move in a direction opposite to a direction in which the lifter frame 620 is installed) such that the vertical portion 627a moves from the binding section S2 to the insertion section S1, the movement is restricted as the catching tabs 514a and 514b interfere with the lower ends of the catching protrusions 626.

Referring to FIG. 9, at the lower end of the catching protrusion 626, the first concave portion 626a may be formed at a side facing the catching tabs 514a and 514b. In the state in which the lifter frame 620 has been completely installed, the catching tabs 514a and 514b may be positioned in the first concave portion 626a.

At the lower end of the catching protrusion 626, the second concave portion 626b may be further formed at a side opposite to the first concave portion 626a. When the lifter frame 620 is installed in a state in which the front and rear sides of the lifter frame 620 are changed, the catching tabs 514a and 514b may be positioned in the second concave portion 626b.

Referring to FIG. 9, fastening bosses 628 may be formed on at least one of the front lifters 61a, 62a, and 63a or the rear lifters 61b, 62b, and 63b. The fastening boss 628 may protrude downward from the inner surface 620b of the lifter frame 620. The fastening boss 628 may extend from the frame upper plate 623. The two or more fastening bosses 628 may be provided to be spaced apart from one another in the front-rear direction.

Referring to FIGS. 5 and 6, fastening holes 513a and 513b may be formed in the drum 51. The fastening holes 513a and 513b may include a first fastening hole 513a1 formed at a position corresponding to the fastening boss 528 when the insertion protrusion 627 of the lifter frame 620 is installed in the mounting slot 511a1 in the first group G1, and a first fastening hole 513a2 formed at a position corresponding to the fastening boss 528 when the insertion protrusion 627 of the lifter frame 620 is installed in the mounting slot 511a2 in the second group G2. The pair of first fastening holes 513a1(1) and 513a1(2) are provided to correspond to the pair of fastening bosses 528, and the second fastening holes 513a2 including a pair of second fastening holes 513a2(1) and 513a2(2) may be provided.

Referring to FIG. 7, the fastening boss 628 may be selectively fastened to the first fastening hole 513a1 or the second fastening hole 513a2 by means of a predetermined fastening member (hereinafter, for exemplary purposes, a screw 98) based on whether the insertion protrusion 627 is inserted into the mounting slot 511a1 in the first group G1 or the mounting slot 511a2 in the second group G2.

In the state in which the insertion protrusion 627 is inserted into the mounting slot 511a and the lifter frame 620 is temporarily assembled, the screw 98 passes through the fastening hole 513a from the outside of the drum 51 and is then fastened to the fastening boss 628, such that the lifter frame 620 may be completely installed.

Meanwhile, as described above, as illustrated in (a) of FIG. 7 or (b) of FIG. 7, the installation position of the lifter frame 620 may vary depending on whether the insertion protrusion 627 is inserted into the mounting slot 511a1 or the mounting slot 511a2. In any case, the mounting slots 511a1 and 511a2, the opening portions 512a1 and 512a2, and the fastening holes 513a1 and 513a2 are hidden by the frame cover 640 in the state in which the lifter is completely installed. That is, the mounting slots 511a1 and 511a2, the opening portions 512a1 and 512a2, and the fastening holes 513a1 and 513a2 are positioned inside the frame cover 640, and thus are not exposed to the inside of the drum 51.

In other words, in the state in which the at least one insertion protrusion 627 provided on each of the lifters 61a, 62a, 63a, 61b, 62b, and 63b is fastened to the mounting slot (for example, 511a1) in any one group (for example, G1) among the mounting slots 511a in the first group G1 and the second group G2, the mounting slot (for example, 511a2) in the other group (for example, G2) may be hidden inside the drum 51 by the lifter.

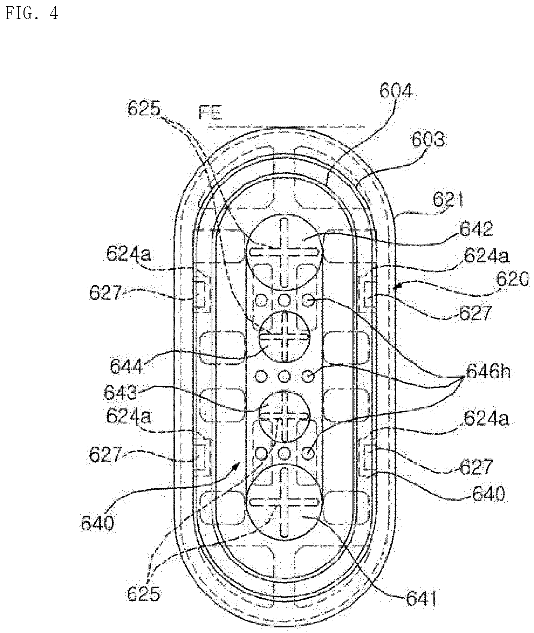

In more detail, in the state in which the at least one insertion protrusion 627 provided on each of the front lifters 61a, 62a, and 63a is inserted into the mounting slot in any one group (for example, G1) of the first group G1 and the second group G2, the front end (FE) (see FIG. 4) of each of the front lifters 61a, 62a, and 63a may be positioned forward from the mounting slots 511a1(1) to 511a1(4) and 511a2(1) to 511a2(4) belonging to the first group G1 and the second group G2. Here, the front end FE may be the front end of the lifter cover 640.

In addition, the rear end of each of the front lifters 61a, 62a, and 63a may be positioned rearward from any of the mounting slots 511a1(1) to 511a1(4) and 511a2(1) to 511a2(4) belonging to the first group G1 and the second group G2.

Depending on the point of view, in the state in which the at least one insertion protrusion 627 is inserted into one of the mounting slots 511a2(1) to 511a2(4) in the second group G2 (see (a) of FIG. 20), a distance D1 from the front end of the drum 51 to the front end FE (see FIG. 4) of each of the front lifters 61a, 62a, and 63a may be shorter than a distance D2 from the front end of the drum 51 to the front end of each of the mounting slots 511a1(1) to 511a1(4) in the first group G1 (that is, the front end of the mounting slot positioned at the foremost side among the mounting slots in the first group) (D1 < D2).

In addition, in the state in which the at least one insertion protrusion 627 is inserted into one of the mounting slots 511a1(1) to 511a1(4) in the first group G1 (see (b) of FIG. 20), a distance D3 from the front end of the drum 51 to the rear end of each of the front lifters 61a, 62a, and 63a may be longer than a distance D4 from the front end of the drum 51 to the rear end of the mounting slot in the second group G2 (that is, the rear end of the mounting slot positioned at the rearmost side among the mounting slots in the second group) (D3 > D4). Since all of the mounting slots 511a1(1) to 511a1(4) and 511a2(1) to 511a2(4) used to install the front lifters 61a, 62a, and 63a are positioned between the front ends and the rear ends of the front lifters 61a, 62a, and 63a, the mounting slots may be hidden by being covered by the front lifters 61a, 62a, and 63a.

Meanwhile, a distance D5 (see FIG. 9) from the front end FE of each of the front lifters 61a, 62a, and 63a to the fastening boss 628 may be longer than the interval D (see FIG. 6) (D5 > D). In this case, even in the state in which the fastening boss 628 is coupled to the second fastening hole 513a2 (see FIG. 7) (in the exemplary embodiment, the state in which the fastening member 98 passes through the second fastening hole 513a2 and is fastened to the fastening boss 628), the front end FE of each of the front lifters 61a, 62a, and 63a is positioned forward from the first fastening hole 513a1 (see FIG. 7), such that the first fastening hole 513a1 is still hidden by each of the front lifters 61a, 62a, and 63a.

Manufacturers of laundry treating apparatuses sometimes produce various types of products having drums having different capacities. In this case, a metal plate having the mounting slots 511a and 511b, the opening portions 512a and 512b, the fastening holes 513a and 513b, and the like is cut out based on a predetermined standard, the raw material 51' or 51" (see FIG. 5) cut out in this manner is rolled up, and the ends of the raw material are joined together so as to manufacture the drum 51. In this case, the metal plate is cut to a predetermined length based on the standard of the drum. In order to manufacture two drums having different lengths, it is necessary to differently adjust the interval between the front lifters 61a, 62a, and 63a and the rear lifters 61b, 62b, and 63b in accordance with the length of the drum.

For example, as illustrated in FIG. 5, the interval between the front lifters 61a, 62a, and 63a and the rear lifters 61b, 62b, and 63b when the length of the drum 51' is long (see (a) of FIG. 5) needs to be greater than the interval between the front lifters 61a, 62a, and 63a and the rear lifters 61b, 62b, and 63b when the length of the drum 51" is short (see (b) of FIG. 5), so that the laundry may be uniformly lifted up by the front and rear lifters 61b, 62b, and 63b even in the case of the large-capacity drum 51.

Therefore, extra mounting slots 511a are further formed in the drum 51 in order to adjust the installation position of at least one of the front lifters 61a, 62a, and 63a or the rear lifters 61b, 62b, and 63b in the front-rear direction when the length of the drum is changed.

In the present exemplary embodiment, the extra mounting slots 511a are provided to adjust the installation positions of the front lifters 51a, 52a, and 53a, but the present disclosure is not necessarily limited thereto. Depending on exemplary embodiments, the extra mounting slots 511b may be provided to adjust the installation positions of the rear lifters 61b, 62b, and 63b.

The extra mounting slots 511a may be formed in the lifter frame 620 such that the extra mounting slots 511a correspond in number to the mounting slots 511a (hereinafter, referred to as 'installation slots') into which the insertion protrusions 627 are inserted, and the extra mounting slots 511a may be formed at points spaced apart from the respective installation slots at a predetermined distance D in the frontward or rearward direction. The installation position of the lifter frame 620 may be changed by the distance D by separating the insertion protrusion 627 from the mounting slot (for example, 511a1) and then inserting the insertion protrusion 627 into the extra mounting slot (for example, 511a2).

Meanwhile, in the exemplary embodiment, the extra opening portions 512a are provided to adjust the installation positions of the front lifters 51a, 52a, and 53a, but the present disclosure is not necessarily limited thereto. Depending on the embodiment, the extra opening portions 512b may also be provided to adjust the installation positions of the rear lifters 61b, 62b, and 63b.

Meanwhile, in the exemplary embodiment, the extra fastening holes 513a are provided to adjust the installation positions of the front lifters 51a, 52a, and 53a, but the present disclosure is not limited thereto. Depending on the embodiment, the extra fastening holes 513b may also be provided to adjust the installation positions of the rear lifters 61b, 62b, and 63b.

FIG. 20 illustrates another exemplary embodiment of the present disclosure. In order to install the lifter frame 620 by means of the front mounting slot 511a, the lifter frame 620 needs to be pushed forward after the insertion protrusion 627 is inserted into the insertion section S1. In order to install the lifter frame 620 by means of the rear mounting slot 511b, the lifter frame 620 needs to be pushed rearward after the insertion protrusion 627 is inserted into the insertion section S1.

On the contrary, in order to separate the lifter frame 620 from the drum 51, the lifter frame 620 is pushed forward or rearward to move the catching portion 627b of the insertion protrusion 627 from the binding section S2 and align the catching portion 627b with the insertion section S1, and the lifter frame 620 is lifted up, such that the catching portion 627b passes through the insertion section S1, and the lifter frame 620 may be separated from the drum 51.

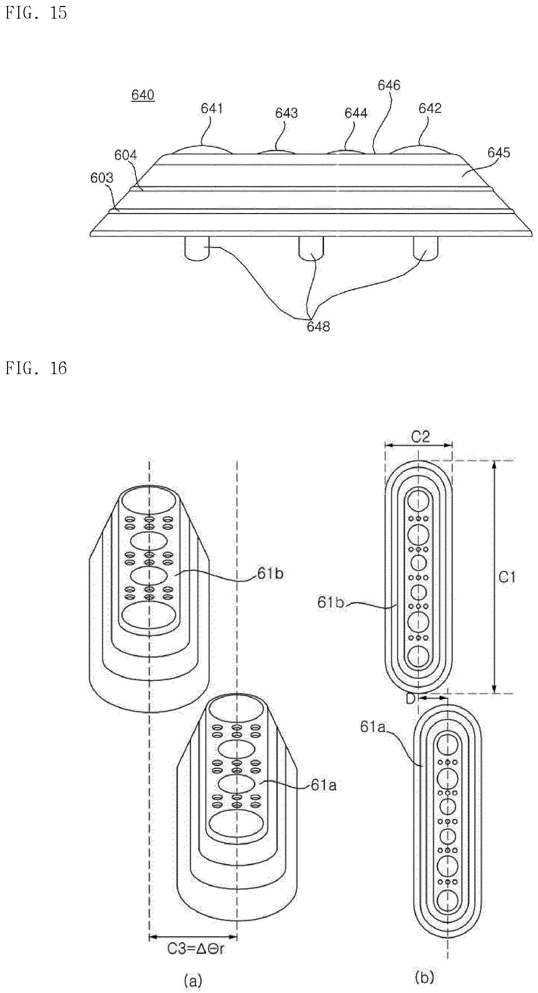

FIG. 16 is a view illustrating a pair of front and rear lifters illustrated in FIG. 1. FIG. 17 is a view illustrating the lifters illustrated in FIG. 16 when viewed from a front side. FIG. 18 is a view (a) illustrating a state in which the drum illustrated in FIG. 1 is deployed and a developed view (b) of the drum having the lifters disposed according to the present invention. FIG. 19 is a view (a) illustrating a change in height of a first fabric caused by the rear lifter in accordance with a rotation angle of the drum and a view (b) illustrating a change in height of a second fabric caused by the front lifter that constitutes a set together with the rear lifter. Hereinafter, description will be made with reference to FIGS. 16 to 19.

Each of the front lifters 61a, 62a, and 63a is disposed on the inner circumferential surface of the drum 51 and extending in the front-rear direction. The plurality of front lifters 61a, 62a, and 63a are disposed based on the rotation axis O at equal angles.

The rear lifters 61b, 62b, and 63b are disposed on the inner circumferential surface of the drum 51 and positioned rearward from the front lifters 61a, 62a, and 63a. Like the front lifters 61a, 62a, and 63a, the rear lifters 61b, 62b, and 63b are disposed based on the rotation axis O at equal angles.

The rear lifters 61b, 62b, and 63b are disposed to form a predetermined phase angle with the front lifters 61a, 62a, and 63a with respect to the rotation axis O. Here, the 'phase angle' is made by defining, as a rotation angle of the drum 51, a point in time at which the lifters 61a, 62a, 63a, 61b, 62b, and 63c reach a point on the circumference. Assuming that the drum 51 is rotated clockwise CW in the exemplary embodiment, the rear lifters 61b, 62b, and 63b reach the same height prior to the front lifters 61a, 62a, and 63a by a degree corresponding to the phase angle Δθ.

As illustrated in FIGS. 16 and 17, assuming that each of the lifters 61a, 62a, 63a, 61b, 62b, and 63b has a length C1 extending in the front-rear direction and a width C2 defined in the left-right direction (or a direction orthogonal to the longitudinal direction), a circumferential distance (C3 = Δθr, see FIG. 16(a); D=C2/2 in Fig. 16(b); C3<C2 in Fig. 17) corresponding to the phase angle is larger than 0 and equal to or smaller than two times the width C2 in the circumferential direction of each of the front lifters 61a, 62a, and 63a.

Referring to FIG. 18, a no-lifter region SE, in which there is no front lifter or rear lifter, is formed between any one pair of front/rear lifters (for example, 61a and 61b) and another pair of front/rear lifters (for example, 62a and 62b) on the inner circumferential surface of the drum 51. The no-lifter region SE may extend from the front end to the rear end of the drum 51.

Specifically, the no-lifter region SE passes between the two adjacent sets of lifters from the front end of the drum 51 and extends to the rear end of the drum 51. Specifically, the no-lifter region SE extends straight from the front end of the drum 51 to the rear end of the drum while passing between the two adjacent front lifters (for example, 61a and 62a) among the plurality of front lifters 61a, 62a, and 63a and between the two rear lifters 61b and 62b that each form the phase angle Δθ with each of the two adjacent front lifters 61a and 62a.

Since the no-lifter region SE extends straight from the front end to the rear end of the drum 51, the laundry may be uniformly distributed to the front and rear regions of the drum 51 in the no-lifter region SE.

Typically, the washing machine detects eccentricity of the drum 51 before performing a spin-drying process, and when the detected eccentricity is within a reference value, the drum is accelerated such that the rotational speed of the drum 51 reaches a predetermined spin-drying speed (or spin-drying RPM). Otherwise, a fabric distribution is performed to change the position of fabrics in the drum 51. The fabric distribution is repeated if the detected eccentricity does not reach the reference value. When the number of times the fabric distribution is repeated reaches a predetermined number of times, it is determined that the fabric distribution has failed, and the spin-drying is stopped.

In the washing machine according to the present exemplary embodiment, a first fabric positioned at the rear side of the drum 51 (that is, the fabric to be lifted up by the rear lifters 61b, 62b, and 63b) and a second fabric positioned at the front side of the drum 51 (that is, the fabric to be lifted up by the front lifters) flow with a time difference (or a phase difference) by the phase angle Δθ formed by the front lifters 61a, 62a, and 63a and the rear lifters 61b, 62b, and 63b, and as a result, the fabric distribution may be more smoothly performed.

More specifically, referring to FIG. 19, when the drum 51 is rotated clockwise CW in a state in which the rear lifters 61b, 62b, and 63b are positioned at a lowest point (θ = 0) of the drum 51, the first fabric begins to be lifted up first by the rear lifters 61b, 62b, and 63b, and then the second fabric begins to be lifted up by the front lifters 61a, 62a, and 63a after the time corresponding to the phase angle Δθ has passed.

Assuming that the fabrics roll (θ < π / 2) and that a position P at which the fabric lifted up by the lifters 61a, 62a, 63a, 61b, 62b, and 63b falls is a position Pd, the first fabric lifted up by the rear lifters 61b, 62b, and 63b reaches the position (or height) Pd and falls first, and then the second fabric lifted up by the front lifters 61a, 62a, and 63a reaches the position Pd and falls.

The first fabric and the second fabric move with a time difference without forming lumps, and thus may be evenly distributed. as a result, it is possible to reduce the number of times the fabric distribution is repeated, reduce the instances of failure to enter the spin-drying stage, and reduce the overall washing time including the spin-drying time.

In addition, since the fabrics flow with a phase difference when the fabrics roll or tumble, friction or collision between the fabrics caused by the relative movement occurs more frequently, such that contamination may be more effectively removed by the washing operation (that is, washing power is improved).

Meanwhile, FIG. 20 is a view illustrating a modified example in which the lifters are disposed, in which (a) illustrates a small-capacity drum and (b) illustrates a large-capacity drum. Referring to FIG. 20, one set of front lifters 61a, 62a, and 63a and rear lifters 61b, 62b, and 63b may be disposed in a row in the front-rear direction. That is, the front lifters 61a, 62a, and 63a and the rear lifters 61b, 62b, and 63b, which constitute one set, may be arranged on the same line without being spaced apart from one another in the circumferential direction.

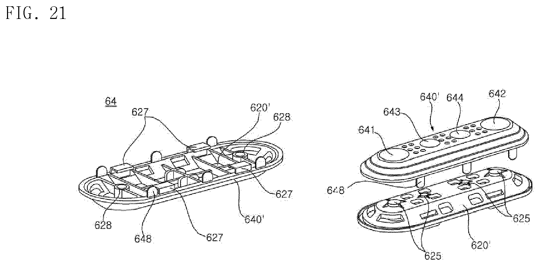

FIG. 21 is a view illustrating another exemplary embodiment of the lifter. The exemplary embodiment illustrated in FIG. 21 provides a lifter 64 including a lifter frame 620' and a frame cover 640' slightly different in shape from those in the above-mentioned exemplary embodiments, but similar in detailed configuration to those in the above-mentioned exemplary embodiments. Therefore, constituent elements identical to the constituent elements according to the above-described exemplary embodiments will be assigned the same reference numerals, and a specific description thereof will be omitted.

## Claims

1. A laundry treating apparatus comprising:
a water storage tub (31) configured to receive washing water;
a drum (51) disposed in the water storage tub (31) and configured to receive laundry, with a cylindrical shape and being configured to rotate about a rotation axis that extends in a front-rear direction of the water storage tub (31); and
a lifters disposed on an inner circumferential surface of the drum (51) and configured to rotate about the rotation axis based on rotation of the drum (51), the lifters comprising:
a plurality of front lifters (61a, 62a, 63a) disposed at a front portion of the drum (51) and arranged along a circumferential direction of the drum (51); and
a plurality of rear lifters (61b, 62b, 63b) disposed at a rear portion of the drum (51) and arranged along the circumferential direction of the drum (51); and
wherein each of the front lifters (61a, 62a, 63a) and the rear lifters (61b, 62b, 63b) is configured to form a pair as a group, and
wherein the front lifter (61a, 62a, 63a) and the rear lifter (61b, 62b, 63b) of each group are configured to dispose to form a phase angle, defined as a rotation angle of the drum (51), in the circumferential direction with respect to the rotation axis, such that one of the front lifter and the rear lifter in each group is configured to reach a point on a circumference in the drum prior to the other of each group of the lifters based on the drum is rotated, and
wherein a circumferential distance (C3) defined by the phase angle between a front lifter and a rear lifter in each group is larger than 0 and smaller than two times of a width of the front lifter in the circumferential direction,
**characterized in that**
each lifter (61a, 62a, 63a, 61b, 62b, 63b) includes
a lifter frame (620) fixed to the inner circumferential surface of the drum and made of plastic, and
a frame cover (640) is configured to cover the lifter frame (620) and fixed to the drum by the lifter frame instead of being fixed directly to the drum.

2. The laundry treating apparatus of claim 1, wherein a circumferential distance (C3) defined by the phase angle between a front lifter and a rear lifter in each group is equal to a width of the front lifter in the circumferential direction.

3. The laundry treating apparatus of claim 1, wherein a circumferential distance (C3) defined by the phase angle between a front lifter and a rear lifter in each group is smaller than the width of the front lifter in the circumferential direction.

4. The laundry treating apparatus of claim 1, wherein a circumferential distance (D) defined by the phase angle between a front lifter and a rear lifter in each group is equal to half of the width of the front lifter in the circumferential direction.

5. The laundry treating apparatus any one of claims 3 to 4, when the lifters of each group are viewed from a front side of the drum, wherein the front lifter (61a, 62a, 63a) and the rear lifter (61b, 62b, 63b) in each group are configured to be overlapped in the front-rear direction of the drum.

6. The laundry treating apparatus of claim 5, wherein the frame cover (640) is made of metal.

7. The laundry treating apparatus any one of claims 1 to 6, wherein the lifter frame (620) includes a frame base (621) with a ring shape opened at a central portion thereof contacted to the inner surface of the drum (51), and
wherein the frame cover includes a cover sidewall (645) extending upward from a lower end thereof and coupled to the frame base (621), and a cover upper plate (646) forming an upper portion thereof; and
wherein a seating groove (621r) is formed in the frame base (621) and spaced apart from the frame sidewall (622), and a lower end of the frame cover (640) is inserted in the seating groove (621r).

8. The laundry treating apparatus of claim 7, wherein the lifter frame (620) includes
a water flow throughhole (624) on the frame sidewall (622), and
an insertion protrusion (627) protruded from the frame base (621), wherein the insertion protrusion (627) comprises
a vertical portion (627a) that extends downward from a bottom surface of the frame base (621), and
a catching portion (627b) that is bent from a lower end of the vertical portion in a direction toward an inside of the periphery of the frame base, and
wherein the insertion protrusion (627) is positioned in the water flow through-hole (624) and formed at left and right sides of the frame base (621) when the lifter frame (620) is viewed from the front side of the drum (51).

9. The laundry treating apparatus of claim 7, wherein the drum has a number of mounting slots (511a, 511b) in each of the front and rear portions, and
wherein a number of insertion protrusions (627) protruding from a bottom surface of the frame base to insert into the mounting slots, and
wherein extra mounting slots (511a) are further formed in one of the front and rear portions of the drum to adjust an installation position of one of the front lifters (61a, 62a, 63a) or the rear lifters (61b, 62b, 63b) in the front-rear direction.

10. The laundry treating apparatus of claim 7, wherein the drum has a number of mounting slots in each of the front and rear portions,
wherein the mounting slots includes a first group of the mounting slots (511a1) and a second group of the mounting slots (511a2), and
wherein the lifter frame (620) includes a number of insertion protrusions (627) protruding from a bottom surface of the frame base (621) corresponding to one of the first group and the second group of mounting slots (511a1, 511a2), and
wherein the insertion protrusions (627) are configured to selectively fastened to one of the first group and the second group of mounting slots (511a1, 511a2).

11. The laundry treating apparatus of claim 10, wherein the mounting slots (511a2) in the second group is positioned at a position shifted rearward by a predetermined distance from the mounting slots (511a1) in the first group, and
wherein the first group and the second group of the mounting slots (511a1, 511a2) are configured to partially overlap each other.

## Patentansprüche

1. Wäschebehandlungsvorrichtung, die aufweist:
einen Wasserspeicherbehälter (31), der zur Aufnahme von Waschwasser konfiguriert ist;
eine Trommel (51), die in dem Wasserspeicherbehälter (31) angeordnet und zur Aufnahme von Wäsche konfiguriert ist, eine zylindrische Form aufweist und so konfiguriert ist, dass sie sich um eine Drehachse dreht, die sich in einer Vorne-Hinten-Richtung des Wasserspeicherbehälters (31) erstreckt; und
Heber, die an einer Innenumfangsfläche der Trommel (51) angeordnet und so konfiguriert sind, dass sie sich aufgrund der Drehung der Trommel (51) um die Drehachse drehen, wobei die Heber aufweisen:
mehrere vordere Heber (61a, 62a, 63a), die an einem vorderen Abschnitt der Trommel (51) angeordnet und entlang einer Umfangsrichtung der Trommel (51) angeordnet sind; und
mehrere hintere Heber (61b, 62b, 63b), die an einem hinteren Abschnitt der Trommel (51) angeordnet und entlang der Umfangsrichtung der Trommel (51) angeordnet sind; und
wobei jeder der vorderen Heber (61a, 62a, 63a) und der hinteren Heber (61b, 62b, 63b) so konfiguriert ist, dass sie als Gruppe ein Paar bilden, und
wobei der vordere Heber (61a, 62a, 63a) und der hintere Heber (61b, 62b, 63b) jeder Gruppe so konfiguriert sind, dass sie einen Phasenwinkel bilden, der als Drehwinkel der Trommel (51) in Umfangsrichtung in Bezug auf die Drehachse definiert ist, so dass einer der vorderen Heber und der hinteren Heber in jeder Gruppe so konfiguriert ist, dass er einen Punkt auf einem Umfang in der Trommel vor dem anderen jeder Gruppe der Heber erreicht, basierend darauf, dass die Trommel gedreht wird, und
wobei ein Umfangsabstand (C3), der durch den Phasenwinkel zwischen einem vorderen Heber und einem hinteren Heber in jeder Gruppe definiert ist, größer als 0 und kleiner als das Zweifache einer Breite des vorderen Hebers in der Umfangsrichtung ist,
**dadurch gekennzeichnet, dass**
jeder Heber (61a, 62a, 63a, 61b, 62b, 63b)
einen Heberrahmen (620) umfasst, der an der Innenumfangsfläche der Trommel befestigt ist und aus Kunststoff besteht und
eine Rahmenabdeckung (640) so konfiguriert ist, dass sie den Heberrahmen (620) abdeckt und durch den Heberrahmen an der Trommel befestigt ist, anstatt direkt an der Trommel befestigt zu sein.

2. Wäschebehandlungsvorrichtung nach Anspruch 1, wobei ein Umfangsabstand (C3), der durch den Phasenwinkel zwischen einem vorderen Heber und einem hinteren Heber in jeder Gruppe definiert ist, gleich einer Breite des vorderen Hebers in der Umfangsrichtung ist.

3. Wäschebehandlungsvorrichtung nach Anspruch 1, wobei ein Umfangsabstand (C3), der durch den Phasenwinkel zwischen einem vorderen Heber und einem hinteren Heber in jeder Gruppe definiert ist, kleiner als die Breite des vorderen Hebers in der Umfangsrichtung ist.

4. Wäschebehandlungsvorrichtung nach Anspruch 1, wobei ein Umfangsabstand (D), der durch den Phasenwinkel zwischen einem vorderen Heber und einem hinteren Heber in jeder Gruppe definiert ist, gleich der Hälfte der Breite des vorderen Hebers in der Umfangsrichtung ist.

5. Wäschebehandlungsvorrichtung nach einem der Ansprüche 3 bis 4, wobei, wenn die Heber jeder Gruppe von einer Vorderseite der Trommel aus betrachtet werden, der vordere Heber (61a, 62a, 63a) und der hintere Heber (61b, 62b, 63b) in jeder Gruppe so konfiguriert sind, dass sie sich in der Vorne-Hinten-Richtung der Trommel überlappen.

6. Wäschebehandlungsvorrichtung nach Anspruch 5, wobei die Rahmenabdeckung (640) aus Metall besteht.

7. Wäschebehandlungsvorrichtung nach einem der Ansprüche 1 bis 6, wobei der Heberrahmen (620) eine Rahmenbasis (621) mit einer Ringform aufweist, die an ihrem mittleren Abschnitt offen ist und mit der Innenfläche der Trommel (51) in Kontakt steht, und
wobei die Rahmenabdeckung eine Abdeckungsseitenwand (645), die sich von ihrem unteren Ende nach oben erstreckt und mit der Rahmenbasis (621) verbunden ist, und eine Abdeckungsoberplatte (646) umfasst, die ihren oberen Abschnitt bildet; und
wobei eine Sitznut (621r) in der Rahmenbasis (621) ausgebildet ist und von der Rahmenseitenwand (622) beabstandet ist, und ein unteres Ende der Rahmenabdeckung (640) in die Sitznut (621r) eingesetzt ist.

8. Wäschebehandlungsvorrichtung nach Anspruch 7, wobei der Heberahmen (620) umfasst:
ein Wasserströmungsdurchgangsloch (624) an der Rahmenseitenwand (622) und
einen Einsetzvorsprung (627), der von der Rahmenbasis (621) vorsteht, wobei der Einsetzvorsprung (627) aufweist:
einen vertikalen Abschnitt (627a), der sich von einer Bodenfläche der Rahmenbasis (621) nach unten erstreckt, und
einen Fangabschnitt (627b), der von einem unteren Ende des vertikalen Abschnitts in Richtung einer Innenseite des Umfangs der Rahmenbasis gebogen ist, und
wobei der Einsetzvorsprung (627) in dem Wasserströmungsdurchgangsloch (624) positioniert ist und an der linken und rechten Seite der Rahmenbasis (621) ausgebildet ist, wenn der Heberrahmen (620) von der Vorderseite der Trommel (51) aus betrachtet wird.

9. Wäschebehandlungsvorrichtung nach Anspruch 7, wobei die Trommel eine Anzahl von Montageschlitzen (511a, 511b) in jedem der vorderen und hinteren Abschnitte aufweist, und
wobei eine Anzahl von Einsetzvorsprüngen (627) von einer Bodenfläche der Rahmenbasis vorsteht, um in die Montageschlitze eingesetzt zu werden, und
wobei zusätzliche Montageschlitze (511a) ferner in einem der vorderen und hinteren Abschnitte der Trommel ausgebildet sind, um eine Installationsposition eines der vorderen Heber (61a, 62a, 63a) oder der hinteren Heber (61b, 62b, 63b) in der Vorne-Hinten-Richtung einzustellen.

10. Wäschebehandlungsvorrichtung nach Anspruch 7, wobei die Trommel eine Anzahl von Montageschlitzen in jedem der vorderen und hinteren Abschnitte aufweist,
wobei die Montageschlitze eine erste Gruppe von Montageschlitzen (511a1) und eine zweite Gruppe von Montageschlitzen (511a2) umfassen, und
wobei der Heberrahmen (620) eine Anzahl von Einsetzvorsprüngen (627) aufweist, die von einer Bodenfläche der Rahmenbasis (621) entsprechend einer der ersten Gruppe und der zweiten Gruppe von Montageschlitzen (511a1, 511a2) vorstehen, und
wobei die Einsetzvorsprünge (627) so konfiguriert sind, dass sie selektiv an einer der ersten Gruppe und der zweiten Gruppe von Montageschlitzen (511a1, 511a2) befestigt werden können.

11. Wäschebehandlungsvorrichtung nach Anspruch 10, wobei die Montageschlitze (511a2) der zweiten Gruppe an einer Position angeordnet sind, die gegenüber den Montageschlitzen (511a1) der ersten Gruppe um einen vorbestimmten Abstand nach hinten versetzt ist, und
wobei die erste Gruppe und die zweite Gruppe der Montageschlitze (511a1, 511a2) so konfiguriert sind, dass sie sich teilweise überlappen.

## Revendications

1. Machine à traiter le linge, comprenant :
une cuve de stockage d'eau (31) prévue pour recevoir de l'eau de lavage ;
un tambour (51) disposé dans la cuve de stockage d'eau (31) et prévu pour recevoir du linge, ayant une forme cylindrique et prévu pour tourner autour d'un axe de rotation prédéterminé s'étendant dans une direction antéropostérieure de la cuve de stockage d'eau (31) ; et
des ailettes disposées sur une surface circonférentielle intérieure du tambour (51) et prévues pour tourner autour de l'axe de rotation suite à la rotation du tambour (51), lesdites ailettes comprenant :
une pluralité d'ailettes avant (61a, 62a, 63a) présentées dans une partie avant du tambour (51) et disposées dans la direction circonférentielle du tambour (51) ; et
une pluralité d'ailettes arrière (61b, 62b, 63b) présentées dans une partie arrière du tambour (51) et disposées dans la direction circonférentielle du tambour (51) ; et
où chaque ailette avant (61a, 62a, 63a) et chaque ailette arrière (61b, 62b, 63b) est prévue pour former une paire en tant que groupe, et
où l'ailette avant (61a, 62a, 63a) et l'ailette arrière (61b, 62b, 63b) de chaque groupe sont prévues pour être disposées de manière à former un angle de phase, défini comme angle de rotation du tambour (51) dans la direction circonférentielle par rapport à l'axe de rotation, de sorte qu'une ailette entre l'ailette avant et l'ailette arrière de chaque groupe est prévue pour atteindre un point sur une circonférence dans le tambour avant l'autre ailette de chaque groupe d'ailettes suite à la rotation du tambour, et
où une distance circonférentielle (C3) définie par l'angle de phase entre une ailette avant et une ailette arrière dans chaque groupe est supérieure à 0 et inférieure à deux fois la largeur de l'ailette avant dans la direction circonférentielle,
**caractérisée en ce que**
chaque ailette (61a, 62a, 63a, 61b, 62b, 63b) comprend :
un cadre d'ailette (620) fixé à la surface circonférentielle intérieure du tambour et en matière plastique, et
où un couvercle de cadre (640) est prévu pour recouvrir le cadre d'ailette (620) et fixé au tambour par le cadre d'ailette au lieu d'être fixé directement au tambour.

2. Machine à traiter le linge selon la revendication 1, où une distance circonférentielle (C3) définie par l'angle de phase entre une ailette avant et une ailette arrière dans chaque groupe est égale à la largeur de l'ailette avant dans la direction circonférentielle.

3. Machine à traiter le linge selon la revendication 1, où une distance circonférentielle (C3) définie par l'angle de phase entre une ailette avant et une ailette arrière dans chaque groupe est inférieure à la largeur de l'ailette avant dans la direction circonférentielle.

4. Machine à traiter le linge selon la revendication 1, où une distance circonférentielle (D) définie par l'angle de phase entre une ailette avant et une ailette arrière dans chaque groupe est égale à la moitié de la largeur de l'ailette avant dans la direction circonférentielle.

5. Machine à traiter le linge selon la revendication 3 ou la revendication 4, où, les ailettes de chaque groupe étant vues de l'avant du tambour, l'ailette avant (61a, 62a, 63a) et l'ailette arrière (61b, 62b, 63b) de chaque groupe sont prévues pour se chevaucher dans la direction antéropostérieure du tambour.

6. Machine à traiter le linge selon la revendication 5, où le couvercle de cadre (640) est en métal.

7. Machine à traiter le linge selon l'une des revendications 1 à 6, où le cadre d'ailette (620) présente une base de cadre (621) ayant une forme annulaire ouverte dans sa partie centrale en contact avec la surface intérieure du tambour (51), et
où le couvercle de cadre présente une paroi latérale de couvercle (645) s'étendant vers le haut à partir de son extrémité inférieure et raccordée à la base de cadre (621), et une plaque supérieure de couvercle (646) formant sa partie supérieure ; et
où une rainure de réception (621r) est formée dans la base de cadre (621) et espacée de la paroi latérale de cadre (622), et une extrémité inférieure du couvercle de cadre (640) est insérée dans la rainure de réception (621r).

8. Machine à traiter le linge selon la revendication 7, où le cadre d'ailette (620) comprend :
un trou de passage d'eau (624) sur la paroi latérale du cadre (622), et
une saillie d'insertion (627) faisant saillie de la base de cadre (621), ladite saillie d'insertion (627) présentant :
une partie verticale (627a) s'étendant vers le bas à partir d'une surface inférieure de la base de cadre (621), et
une partie d'accrochage (627b) pliée à partir d'une extrémité inférieure de la partie verticale vers l'intérieur de la périphérie de la base de cadre,
où la saillie d'insertion (627) est positionnée dans le trou de passage d'eau (624) et formée sur les côtés gauche et droit de la base de cadre (621) lorsque le cadre d'ailette (620) est vu de l'avant du tambour (51).

9. Machine à traiter le linge selon la revendication 7, où le tambour présente une pluralité de fentes de montage (51 1a, 511b) dans la partie avant et la partie arrière, et
où une pluralité de saillies d'insertion (627) font saillie d'une surface inférieure de la base de cadre pour s'insérer dans les fentes de montage, et
où des fentes de montage supplémentaires (511a) sont en outre formées dans la partie avant ou la partie arrière du tambour pour ajuster une position de montage d'une des ailettes avant (61a, 62a, 63a) ou des ailettes arrière (61b, 62b, 63b) dans la direction antéropostérieure.

10. Machine à traiter le linge selon la revendication 7, où le tambour présente une pluralité de fentes de montage dans la partie avant et la partie arrière,
où lesdites fentes de montage comprennent un premier groupe de fentes de montage (511a1) et un deuxième groupe de fentes de montage (511a2), et
où le cadre d'ailette (620) présente une pluralité de saillies d'insertion (627) faisant saillie d'une surface inférieure de la base de cadre (621) correspondant au premier groupe ou au deuxième groupe de fentes de montage (511a1, 511a2), et
où les saillies d'insertion (627) sont prévues pour être fixées de manière sélective au premier groupe ou au deuxième groupe de fentes de montage (511a1, 511a2).

11. Machine à traiter le linge selon la revendication 10, où les fentes de montage (511a2) du deuxième groupe sont présentées à un emplacement décalé vers l'arrière d'une distance prédéterminée par rapport aux fentes de montage (511a1) du premier groupe, et
où le premier groupe et le deuxième groupe de fentes de montage (511a1, 511a2) sont prévus de manière à se chevaucher partiellement.
